# EUROPÄISCHE PATENTSCHRIFT

(11) **EP 1 175 459 B1**
(45) Veröffentlichungstag und Bekanntmachung des Hinweises auf die Patenterteilung: **26.03.2003**
(21) Anmeldenummer: 00926840.0
(22) Anmeldetag: 07.04.2000
(51) Int. Cl.: C08J 9/36, B29C 44/56

(54) **KOMPRIMIERTE POLYURETHANHARTSCHAUMSTOFFE**
COMPRESSED, RIGID POLYURETHANE FOAMS
MOUSSES DE POLYURETHANNE RIGIDES COMPRIMEES

(30) Priorität: 20.04.1999 DE 19917787
(43) Veröffentlichungstag der Anmeldung: 30.01.2002
(73) Patentinhaber: Bayer Aktiengesellschaft, 51368 Leverkusen (DE)
(72) Erfinder: HEINEMANN, Torsten, D-53721 Siegburg (DE); DIETRICH, Karl-Werner, D-51519 Odenthal (DE); KLÄN, Walter, D-51573 Leverkusen (DE)
(86) Internationale Anmeldenummer: EP0003119
(87) Internationale Veröffentlichungsnummer: WO00063281

(56) Entgegenhaltungen:
- WO-A-97/27986
- US-A- 4 816 494

## Beschreibung

Die vorliegende Erfindung betrifft ein Verfahren zur Herstellung von komprimierten Polyurethan-Hartschaumstoffen sowie deren Verwendung als Stützmaterialien für Vakuumdämmungen.

Durch möglichst vollständiges Entfernen von Luft und anderen Gasen aus einem .porösen Formkörper lassen sich dessen Dämmeigenschaften wesentlich verbessern. Von diesem Effekt wird in Vakuumdämmungen Gebrauch gemacht. Ein Beispiel hierfür sind die sogenannten Vakuumpaneele, die zur Verringerung des Energieverbrauchs von Kühlgeräten eingesetzt werden können. Zu ihrer Herstellung wird ein weitgehend offenporiges Substrat evakuiert und von einer permeationsdichten Hülle umgeben. Für die Gebrauchseigenschaften des Vakuumpaneels sind die Eigenschaften des Substrats von großer Bedeutung. Es muß eine möglichst hohe Offenporigkeit aufweisen, um eine schnelle und vollständige Gasentfernung zu ermöglichen. Es muß eine hohe Druckfestigkeit aufweisen, damit das Vakuumpaneel dem äußeren Luftdruck widerstehen kann. Die Zellen des Substrats müssen möglichst klein sein, damit schon bei technisch leicht zu erreichenden Innendrucken gute Dämmeigenschaften erzielt werden.

Es ist bekannt, offenzellige Polyurethanhartschäume, wie sie z.B. in US-A-5 350 777, EP-A-498 628, DE-A-43 03 809, US-A-5 250 579 und US-A-5 312 846 beschrieben sind, als Stützmaterial für Vakuumdämmungen einzusetzen. Nachteilig ist bei diesen Hartschäumen ihr relativ großer Zellduchmesser, der es erforderlich macht, den mit ihnen gefüllten Formkörper bis zu sehr kleinen Drücken zu evakuieren, was mit hohem technischen Aufwand verbunden ist.

US-A-5 844 014 lehrt, daß die Dämmeigenschaften von evakuiertem offenzelligen Schäumen thermoplastischer Kuststoffe durch Komprimieren des Schaums verbessert werden können. Polyurethanhartschäume sind jedoch duroplastisch; daher wird bei einem normalen Komprimierungsvorgang ihre Struktur so zerstört, daß die für Vakuumdämmungen notwendige hohe Druckfestigkeit nicht mehr erreicht wird.

Es wurde nun gefunden, daß es möglich ist, feinzellige offenzellige Polyurethanhartschäume herzustellen, wenn der aufgeschäumte Polyurethanschaum kurze Zeit vor oder nach dem Ende der Abbindezeit komprimiert wird.

Gegenstand der Erfindung ist somit ein Verfahren zur Herstellung von feinzelligen Polyurethan- oder Polyisocyanurat-Hartschaumstoffen, bei dem
1. ein offenzelliger Polyurethan- oder Polyisocyanurat-Hartschaum durch Vermischen einer geeigneten Polyolformulierung mit einem Polyisocyanat hergestellt wird, und
2. der so erhaltene Polyurethan- oder Polyisocyanurat-Hartschaum nach Ablauf von 80 bis 200%, bevorzugt, 100 bis 150%, besonders bevorzugt 105 bis 130% der Abbindezeit auf 5 bis 95 %, bevorzugt 30 bis 70 %, besonders bevorzugt 40 bis 60 % seines Ausgangsvolumens komprimiert wird.

Im ersten Schritt des erfindungsgemäßen Verfahrens wird in dem Fachmann im Prinzip bekannter Weise ein offenzelliger Polyurethan- oder Polyisocyanurat-Hartschaum durch Vermischen eines Polyisocyanats mit einer geeigneten Polyolkomponente hergestellt, die auch Treibmittel, Katalysatoren, und andere Hilfsstoffe, z.B. Schaumstabilisatoren, Antioxidantien etc. enthalten kann. Erfindungsgemäß weist der Polyurethan- oder Polyisocyanurat-Hartschaum vor dem Komprimieren einen mittleren Zelldurchmesser von weniger als 250 µm, bevorzugt weniger als 150 µm auf und eine nach DIN ISO 4590-92 gemessenen Offenzelligkeit 50 bis 100 %, bevorzugt 80 bis 100 %.

Um die für die Verschäumung notwendige Funktionalität zu erreichen, enthalten erfindungsgemäße Polyolformulierungen mindestens ein Polyol, das mindestens zwei gegenüber Isocyanaten reaktive Wasserstoffatome und ein zahlenmittleres Molekulargewicht von 150 bis 12.500 g/mol, vorzugsweise 200 bis 1500 g/mol aufweist. Solche Polyole können erhalten werden durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid, an Starterverbindungen wie Wasser oder mehrwertige Alkohole wie Sucrose, Sorbitol, Pentaerythrit, Trimethylolpropan, Glycerin, Propylenglykol, Ethylenglykol, Diethylenglykol sowie Mischungen aus den genannten Starterverbindungen. Als Starterverbindungen können auch Ammoniak oder Verbindungen verwendet werden, die mindestens eine primäre, sekundäre oder tertiäre Aminogruppe aufweisen, beispielsweise aliphatische Amine wie Ethylendiamin, Oligomere des Ethylendiamins (z.B. Diethylentriamin, Triethylentetramin oder Pentaethylenhexamin), Ethanolamin, Diethanolamin, Triethanolamin, N-Methyl- oder N-Ethyl-diethanolamin, 1,3-Propylendiamin, 1,3- bzw. 1,4-Butylendiamin, 1,2-Hexamethylendiamin, 1,3-Hexamethylendiamin, 1,4-Hexamethylendiamin, 1,5-Hexamethylendiamin oder 1,6-Hexamethylendiamin, aromatische Amine wie Phenylendiamine, Toluylendiamine (2,3-Toluylendiamin, 3,4-Toluylendiamin, 2,4-Toluylendiamin, 2,5-Toluylendiamin, 2,6-Toluylendiamin oder Gemische der genannten Isomeren), 2,2'-Diaminodiphenylmethan, 2,4'-Diaminodiphenylmethan, 4,4'-Diaminodiphenylmethan oder Gemische dieser Isomeren. Die Polyolformulierung enthält 0 bis 95 Gewichtsteile, bevorzugt 10 bis 40 Gewichtsteile dieser Komponente.

Erfindungsgemäße Polyolformulierungen können auch Polyesterpolyole mit einem zahlenmittleren Molekulargewicht von 100 bis 30.000 g/mol, bevorzugt 150 bis 10.000 g/mol, besonders bevorzugt 200 bis 600 g/mol enthalten, die aus aromatischen und/oder aliphatischen Dicarbonsäuren und mindestens zwei Hydroxylgruppen aufweisenden Polyolen hergestellt werden können. Beispiele für Dicarbonsäuren sind Phthalsäure, Fumarsäure, Maleinsäure, Azelainsäure, Glutarsäure, Adipinsäure, Korksäure, Terephthalsäure, Isophthalsäure, Decandicarbonsäure, Malonsäure, Glutarsäure und Bernsteinsäure. Es können einzelne Dicarbonsäuren sowie beliebige Mischungen verschiedener Dicarbonsäuren eingesetzt werden. Anstelle der freien Dicarbonsäuren können auch die entsprechenden Dicarbonsäurederivate, wie z.B. Dicarbonsäuremono- oder diester von Alkoholen mit ein bis vier Kohlenstoffatomen oder Dicarbonsäureanhydride eingesetzt werden. Als Alkoholkomponente zur Veresterung werden vorzugsweise verwendet: Ethylenglykol, Diethylenglykol, Triethylenglykol, Tetraethylenglykol, 1,2-Propandiol, 1,3-Propandiol, 1,4-Butandiol, 1,5-Pentandiol, 1,6-Hexandiol, 1,10-Decandiol, Glycerin, Trimethylolpropan, bzw. Mischungen daraus. Die erfindungsgemäßen Polyolformulierungen können auch Polyetherester enthalten, wie sie z.B. gemäß EP-A-250 967 durch Reaktion von Phthalsäureanhydrid mit Diethylenglykol und nachfolgend mit Ethylenoxid erhältlich sind. Die Polyolformulierung kann 0 bis 90, bevorzugt 5 bis 30 Gewichtsteile Polyesterpolyol enthalten.

Die erfindungsgemäßen Polyolformulierungen enthalten auch mindestens einen Katalysator. In Mengen von 0 bis 10 Gewichtsteilen, bevorzugt 0,5 bis 5 Gewichtsteilen. Erfindungsgemäß können die in der Polyurethanchemie üblichen Katalysatoren verwendet werden. Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)-hexahydrotriazin, Dimethylaminopropylformamid, N,N,N',N'-Tetramethylethylendiamin, N,N,N',N'-Tetrametylbutandiamin, Tetrametylhexandiamin, Pentamethyldiethylentriamin, Tetramethyldiaminoethylether, Dimethylpiperazin, 1,2-Dimethylimidazol, 1-Azabicyclo[3,3,0]octan, Bis-(dimethylaminopropyl)-harnstoff, N-Methylmorpholin, N-Ethylmorpholin, N-Cyclohexylmorpholin, 2,3-Dimethyl-3,4,5,6,-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Kaliumacetat, Natriumacetat, Natriumhydroxid oder Gemische dieser oder ähnlicher Katalysatoren.

Erfindungsgemäß können auch ionische und nichtionische Emulgatoren im Mengen von 0 bis 10 Gewichtsteilen, bevorzugt 0,5 bis 2 Gewichtsteilen mitverwendet werden. Solche Emulgatoren sind beispielsweise in "Römpp Chemie Lexikon", Band 2, Thieme Verlag Stuttgart, 9. Auflage 1991, S. 1156ff. beschrieben.

Die erfindungsgemäße Polyolkomponente enthält 0,1 bis 10 Gewichtsteile, bevorzugt 0,5 bis 5 Gewichtsteile Wasser.

Als Isocyanat-Komponente können aromatische Polyisocyanate eingesetzt werden, wie sie in Justus Liebigs Annalen der Chemie, 562 (1949) 75 beschrieben werden, beispielsweise solche der Formel

Q(NCO)ₙ,

wobei
- n: Werte von 2 bis 4, vorzugsweise 2 annehmen kann, und
- Q: einen aliphatischen Kohlenwasserstoffrest mit 2 bis 18, vorzugsweise 6 bis 10 C-Atomen, einen cycloaliphatischen Kohlenwasscrstoffrest mit 4 bis 15, vorzugsweise 5 bis 10 C-Atomen, einen aromatischen Kohlenwasserstoffrest mit 8 bis 15, vorzugsweise 8 bis 13 C-Atomen bedeutet.

Bevorzugt sind Polyisocyanate, wie sie in DE-OS 28 32 253 beschrieben werden.

Besonders bevorzugt eingesetzt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere modifizierte Polyisocyanate, die sich vom 2,4- und 2,6-Toluylendiisocyanat bzw. vom 4,4'und/oder 2,4'-Diphenylmethandiisocyanat ableiten.

Verwendet werden können auch Prepolymere aus den genannten Isocyanaten und organischen Verbindungen mit mindestens einer Hydroxylgruppe. Beispielhaft genannt seien ein bis vier Hydroxylgruppen aufweisende Polyol- oder Polyester mit (zahlenmittleren) Molekulargewichten von 60 bis 1.400.

Mitverwendet werden können auch Paraffine oder Fettalkohole oder Dimethylpolysiloxane sowie Pigmente oder Farbstoffe, ferner Stabilisatoren gegen Alterungsund Witterungseinflüsse, Weichmacher und fungistatisch und bakteriostatisch wirkende Substanzen sowie Füllstoffe wie Bariumsulfat, Kieselgur, Ruß oder Schlämmkreide. Diese werden meist der Polyolkomponente in Mengen von 0 bis 10 Gewichtsteilen, bevorzugt 0 bis 5 Gewichtsteilen zugesetzt.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg/Höchtlen (Hrsg.):"Kunststoff-Handbuch", Band VII, Carl Hanser Verlag, München 1966, Seiten 121 bis 205, und G. Oertel (Hrsg.):"Kunststoff-Handbuch", Band VII, Carl Hanser Verlag, 2. Auflage, München 1983 beschrieben.

Der im ersten Schritt des erfindungsgemäßen Verfahrens erhaltene Polyurethan- oder Polyisocyanurat-Hartschaum wird nach Ablauf von 80 bis 200 %, bevorzugt, 100 bis 150%, besonders bevorzugt 105 bis 130% der Abbindezeit auf 5 bis 95%, bevorzugt 30 bis 70 %, besonders bevorzugt 40 bis 60 % seines Ausgangsvolumens komprimiert. Die Abbindezeit ist diejenige Zeit, nach der bei der Polyaddition zwischen Polyol und Polyisocyanat ein theoretisch unendlich ausgedehntes Polymer entstanden ist. Die Abbindezeit läßt sich experimentell dadurch ermitteln, daß in das aufschäumende Reaktionsgemisch in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit. Vorzugsweise beginnt man diese Prozedur erst wenige Sekunden vor der erwarteten Abbindezeit. Bei maschineller Vermischung beträgt die Abbindezeit von technisch einsetzbaren Polyurethanschäumen üblicherweise 25 bis 100 Sekunden. Der Schaumstoff kann diskontinuierlich, z.B. in einer manuell oder automatisch betriebenen Presse, oder kontinuierlich durchgeführt werden, z.B. indem der Schaum durch Walzen auf einem Transportband geführt wird. Die so erhaltenen Polyurethanformkörper weisen sehr kleine mittlere Zelldurchmesser auf. Dadurch haben sie bei gegebenem Druck eine geringere Wärmeleitzahl als die nicht komprimierten Formkörper.

Substrate für Vakuumdämmung entfalten ihre höchste Dämmwirkung, wenn der sogenannte "kritische Druck", bei dem die mittlere freie Weglänge der Gasmoleküle größer wird als der Zelldurchmesser, unterschritten wird. Die derzeit für Vakuumdämmungen eingesetzten Substrate müssen sehr lange evakuiert werden, bis der kritische Druck erreicht wird. Dagegen kann bei den nach dem erfindungsgemäßen Verfahren hergestellten Substraten der kritische Druck schon innerhalb kurzer Zeit um 50 % und mehr unterschritten werden.

Gegenstand der Erfindung ist auch die Verwendung der nach dem erfindungsgemäßen Verfahren hergestellten Hartschaumstoffe in Vakuumdämmungen, z.B. als Füllsubstrate für Vakuumisolationspaneele oder andere mit einer permeationsdichten Umhüllung versehene evakuierte Körper. Bei ihrer Herstellung kann der gesamte Hartschaum während oder nach dem Komprimieren vorübergehend oder permanent evakuiert werden.

### Beispiele

In den Beispielen wurden folgende Edukte eingesetzt:
- Polyol A:: Polyethylenoxidpolyether (Mₙ =300) auf Basis Trimethylolpropan
- Polyol B:: Polyetherester (Mₙ =375) auf Basis von Phthalsäureanhydrid, Diethylenglykol und Ethylenoxid
- Polyol C:: Rizinusöl
- Isocyanat:: Polyphenylpolymethylenpolyisocyanat, NCO-Gehalt 31,5 Gew.-% (Desmodur® 44V20, Bayer AG)
- Stabilisator:: Silikonstabilisator (Tegostab® B 8404, Th. Goldschmidt AG, D-45127 Essen)
- Emulgator:: Natriumsulfatsalz eines ethoxylierten Fettsäurelkohols, 30 % in Wasser (Servo Delden B.V., NL-7491 AE Delden)
- Katalysator 1:: Dimethylcyclohexylamin
- Katalysator 2:: Kaliumacetat (25 Gew.-% in Diethylenglykol)

Die Verschäumung erfolgte auf einer Hochdruckmaschine (HK 165, Hennecke GmbH, D-53757 Sankt Augustin)

### Beispiel 1 (Vergleichsbeispiel)

100 Gew.-Teile einer Mischung aus 19,2 Gew.-Teilen Polyol A, 19,7 Gew.-Teilen Polyol B, 57,7 Gew.-Teilen Polyol C, 0,8 Gew.-Teilen Katalysator 1, 0,9 Gew.-Teilen Katalysator 2, 3,6 Gew.-Teilen Emulgator, 0,9 Gew.-Teilen Wasser und 1,4 Gew.-Teilen Stabilisator werden mit 127 Gew.-Teilen Isocyanat zur Reaktion gebracht.

Die Abbindezeit des Reaktionsgemisches beträgt 35 Sekunden. Es entsteht ein Polyurethanhartschaum mit einer freien Rohdichte von 35 kg/m³, einer nach DIN ISO 4590-92 gemessenen Offenzelligkeit von 99,5%, einer Wärmeleitzahl von 12,5 mW/m·K bei einem Druck von 0,7 mbar und einer nach DIN 53421-84 bestimmten Druckfestigkeit von 0,2 MPa. Zur Evakuierung einer Hartschaumprobe mit den Abmessungen 40 x 40 x 3 cm³ auf den angegeben Druck ist zweistündiges Evakuieren mit einer Drehschieberpumpe mit einer Saugleistung von 1 m³/h notwendig.

### Beispiel 2 (erfindungsgemäß)

Der Versuch aus Beispiel 1 wird wiederholt, wobei der Schaum 5 Sekunden nach Ende der Abbindezeit auf 50 % seines ursprünglichen freigeschäumten Volumens komprimiert wird. Es entsteht ein Polyurethanhartschaum mit einer freien Rohdichte von 70 kg/m³, einer nach DIN ISO 4590-92 gemessenen Offenzelligkeit von 98 %, einer Wärmeleitzahl von 7,8 mW/m·K bei einem Druck von 0,7 mbar und einer nach DIN 53421-84 bestimmten Druckfestigkeit von 0,5 MPa. Zur Evakuierung einer Hartschaumprobe mit den Abmessungen 40 x 40 x 3 cm³ auf den angegeben Druck ist zehnminütiges Evakuieren mit einer Drehschieberpumpe mit einer Saugleistung von 1 m³/h notwendig.

### Beispiel 3 (Vergleichsbeispiel)

Der in Beispiel 1 erhaltene Schaum wird 24 Stunden nach dem Ende der Abbindezeit auf 50% seines ursprünglichen freigeschäumten Volumens komprimiert. Die Oberfläche des dadurch erhaltenen Polyurethanformkörpers ist weich und instabil. Er weist eine nach DIN 53421-84 bestimmte Druckfestigkeit von 0,14 MPa auf.

Die Beispiele zeigen, daß nach dem erfindungsgemäßen Verfahren Polyurethanformkörper mit hervorragenden Dämmeigenschaften im Vakuum bei gleichzeitig hoher Druckfestigkeit erhalten werden.

## Patentansprüche

1. Verfahren zur Herstellung von feinzelligen Polyurethan- oder Polyisocyanurat-Hartschaumstoffen, bei dem
a) ein offenzelliger Polyurethan- oder Polyisocyanurat-Hartschaum durch Vermischen einer geeigneten Polyolformulierung mit einem Polyisocyanat hergestellt wird, und
b) der so erhaltene Polyurethan- oder Polyisocyanurat-Hartschaum nach Ablauf von 80 bis 200 % der Abbindezeit auf 5 bis 95 % seines Ausgangsvolumens komprimiert wird, wobei die Abbindezeit die Zeit ist vom Vermischen der Komponenten bis zu dem Zeitpunkt, bei dem an einem in das aufschäumende Reaktionsgemisch eingetauchten dünnen Holzstab beim Herausziehen Fäden hängen bleiben.

2. Verfahren gemäß Anspruch 1, bei dem der Polyurethan- oder Polyisocyanurat-Hartschaum während des Komprimierens evakuiert wird.

3. Polyurethan- oder Polyisocyanurat-Hartschaum, erhältlich nach Anspruch 1 oder 2.

4. Verwendung des nach Anspruch 1 oder 2 hergestellten Polyurethan- oder Polyisocyanurat-Hartschaums in Vakuumdämmungen.

## Claims

1. A process for the preparation of fine-cell polyurethane or polyisocyanurate rigid foams, wherein
a) an open-cell polyurethane or polyisocyanurate rigid foam is prepared by mixing a suitable polyol formulation with a polyisocyanate, and
b) the polyurethane or polyisocyanurate rigid foam thus obtained is compressed to 5% to 95% of its starting volume after 80% to 200% of the fibre time, the fibre time being the time from the mixing of the components to the time when filaments remain suspended on a thin wooden rod, which is immersed into the foaming reaction mixture, when it is withdrawn.

2. A process according to claim 1, wherein the polyurethane or polyisocyanurate rigid foam is evacuated during compression.

3. Polyurethane or polyisocyanurate rigid foam obtainable by the process according to claim 1 or 2.

4. The use of the polyurethane or polyisocyanurate rigid foam prepared according to claim 1 or 2 in vacuum insulation units.

## Revendications

1. Procédé de préparation de mousses rigides en polyuréthanne ou polyisocyanurate, à petites cellules, dans lequel :
a) on prépare une mousse rigide en polyuréthanne ou polyisocyanurate, à cellules ouvertes, par mélange d'une formulation de polyol appropriée avec un polyisocyanate, et
b) la mousse rigide en polyuréthanne ou polyisocyanurate ainsi obtenue est comprimée après écoulement de 80 à 200% du temps de prise, jusqu'à 5 à 95% de son volume de départ, où le temps de prise est le temps depuis le mélange des composants jusqu'au moment où des fils restent accrochés sur un barreau en bois mince immergé dans le mélange réactionnel moussant lors de l'extraction.

2. Procédé suivant la revendication 1, dans lequel la mousse rigide en polyuréthanne ou polyisocyanurate est évacuée pendant le compression.

3. Mousse rigide en polyuréthanne ou polyisocyanurate, disponible suivant la revendication 1 ou 2.

4. Utilisation de la mousse rigide en polyuréthanne ou polyisocyanurate préparée suivant la revendication 1 ou 2, dans des isolations sous vide.
